# EUROPÄISCHE PATENTSCHRIFT

(11) **EP 1 013 365 B1**
(45) Veröffentlichungstag und Bekanntmachung des Hinweises auf die Patenterteilung: **17.04.2002**
(21) Anmeldenummer: 99204337.2
(22) Anmeldetag: 16.12.1999
(51) Int. Cl.: B23B 27/14

(54) **Zerspanungswerkzeug**
Cutting tool
Outil de coupe

(30) Priorität: 22.12.1998 AT 85198
(43) Veröffentlichungstag der Anmeldung: 28.06.2000
(73) Patentinhaber: Plansee Tizit Aktiengesellschaft, 6600 Reutte /Tirol (AT)
(72) Erfinder: Ertl, Christian, 6600 Reutte (AT); Koch, Wolfgang, 6600 Reutte (AT)
(74) Vertreter: Lohnert, Wolfgang, Dr.

(56) Entgegenhaltungen:
- WO-A-98/01249
- WO-A-98/26892
- DE-A- 4 244 316

## Beschreibung

Die Erfindung betrifft ein Zerspanungswerkzeug, bestehend aus einem Werkzeuggrundkörper und einem oder mehreren Schneideinsätzen, der Werkzeuggrundkörper mit einem oder mehreren Plattensitzen jeweils mit einer Auflagefläche und einer oder mehreren seitlichen Anlageflächen zur Aufnahme eines auswechselbaren Schneideinsatzes mit mindestens abschnittsweise zylinder- oder kegelstumpfförmiger Freifläche, wobei der Schneideinsatz in der Freifläche oder in einem an die Freifläche angrenzenden Abschnitt mehrere seitliche dachförmige Einkerbungen mit jeweils einer ebenen Indexierfläche aufweist und über einen am Werkzeuggrundkörper vorspringend angeordneten Anschlag, der mit seinem Ende an einer Indexierfläche anliegt, in vorbestimmten, unterschiedlichen Lagen positionierbar ist (siehe WO 98/26892).

Schneideinsätze zur Zerspanung, die in Werkzeuggrundkörpern auswechselbar befestigt sind, sind in überwiegendem Maß mit mehreren Schneidkanten ausgestattet, die durch Änderung der Position der Schneideinsätze im Werkzeuggrundhalter nacheinander zum Einsatz gebracht werden. Vielfach ist die genaue Position der jeweiligen Schneidkante aufgrund der äußeren Geometrie des Schneideinsatzes, z.B. als Drei-, Vier- oder Sechseckform, die dem Plattensitz des Werkzeuggrundkörpers zur Aufnahme des Schneideinsatzes angepaßt ist, automatisch vorgegeben.

Gleichzeitig ist bei derartigen Schneideinsätzen durch die Anpassung des Plattensitzes im Werkzeuggrundkörper an den jeweiligen Schneideinsatz eine gute Verdrehsicherung des Schneideinsatzes gegen die bei der Zerspanung auftretenden Schneidkräfte gegeben.

Schwieriger ist eine verdrehsichere, genaue Positionierung bei Schneideinsätzen, die als Rundplatte oder mit zumindest teilweise kurvenförmiger Außenkontur ausgebildet sind. Hier ist aufgrund der kreisförmigen Anlagefläche im Werkzeughalter keine automatische Positionierung und Verdrehsicherung des Schneideinsatzes möglich.

Zur Erreichung einer genauen Positionierung und verdrehsicheren Befestigung bei derartigen Schneideinsätzen ist es bekannt, zumindest Abschnitte an der kegelstumpfförmigen oder zylindrischen Freifläche mit ebenen Positionierflächen zu versehen, die mit entsprechend ebenen Flächen an der Anlagefläche des Werkzeuggrundkörpers zusammenwirken. Nachteilig bei derartigen Ausführungen ist es, daß es beim Fixieren der Schneideinsätze, das in aller Regel durch eine Befestigungsschraube durch ein Mittelloch der Schneideinsätze erfolgt, aufgrund der Anzugskraft der Schraube und der daraus resultierenden Haftreibung zwischen Schraube und Mittelloch des Schneideinsatzes zu einer leichten Verdrehung und damit zu einem Abdrücken des Schneideinsatzes von der Auflagefläche kommt.

Aufgrund des Toleranzspieles der einzelnen Positionierflächen zueinander und durch den geringen Widerstand beim Weiterindexieren muß der genaue Sitz des Schneideinsatzes durch leichtes Verdrehen bis zum konkreten Anschlag eingestellt werden, wodurch sich die Lage der Schneideinsätze während des Zerspanungsvorganges wiederum geringfügig ändern kann.

Weiters ist es bekannt, derartige Schneideinsätze durch Ausnehmungen in der Grundfläche oder in der Freifläche in welche ein am Werkzeuggrundkörper befestigter Stift eingreift, festzulegen.
Bei derartigen Lösungen entsprechend der DE-OS 42 44 316 ist es bekannt geworden, entweder den Stift senkrecht an der Auflagefläche des Werkzeuggrundkörpers zu befestigen und in entsprechende, in die Grundfläche des Schneideinsatzes eingearbeitete Ausnehmungen mit entsprechenden Indexierflächen eingreifen zu lassen, oder den Indexierstift seitlich, waagrecht am Werkzeuggrundkörper zu befestigen, und mit seinem Ende in Indexierflächen an entsprechend seitlichen Ausnehmungen in der Freifläche des Schneideinsatzes anliegen zu lassen.
Nachteilig bei einer derartigen Lösung ist es, daß bei einer senkrechten Befestigung des Stiftes im Werkzeuggrundkörper dieser durch die Bohrung für den Stift noch im Bereich der Auflagefläche für die Wendeschneidplatte geschwächt ist und sich daher bei einem entsprechend langen Einsatz des Werkzeuggrundkörpers der Schneideinsatz in die Auflagefläche einarbeiten kann, wodurch eine sichere Auflage beeinträchtigt wird.

Bei einer waagrechten Befestigung des Stiftes im Werkzeuggrundkörper müssen die seitlichen Ausnehmungen in der Freifläche des Schneideinsatzes sehr tief ausgeführt werden, um eine ausreichend gute Anlage des Stiftes an den Indexierflächen zu erreichen.
Dies ist neben einer größeren Schwächung des Schneideinsatzes mit dem Nachteil verbunden, daß zum Weiterdrehen des Schneideinsatzes in eine neue Position dieser von der Auflagefläche der Werkzeuggrundkörper sehr hoch angehoben werden muß, so daß bei einer Befestigung des Schneideinsatzes über eine in ein Mittelloch des Schneideinsatzes eingreifende Schraube, die Schraubverbindung praktisch vollständig gelöst werden muß.

Aufgabe der vorliegenden Erfindung ist es, ein Zerspanungswerkzeug zur Aufnahme von indexierbaren Schneideinsätzen zu schaffen, bei dem die genannten Nachteile vermieden werden.

Erfindungsgemäß wird dies dadurch gelöst, daß die zylinder- oder kegelstumpfförmige Freifläche als Kontaktfläche mit der bzw. den seitlichen Anlageflächen dient, daß die einzelnen Indexierflächen unter einem Winkel β zwischen 5° und 20° zu einer Senkrechten N auf die Grundfläche des Schneideinsatzes geneigt sind und daß die Schnittlinie zwischen einer Indexierfläche und der Grundfläche mit derjenigen Durchmesserlinie D - bezogen auf die zylinder- oder kegelstumpfförmige Freifläche - einen Winkel γ im Bereich zwischen 15° und 45° einschließt, die den radial innen liegenden Endpunkt dieser Schnittlinie schneidet.

Durch diese Ausgestaltung können die seitlichen Einkerbungen in der Freifläche möglichst klein ausgeführt werden, so daß dadurch eine übermäßig große Schwächung des Schneideinsatzes vermieden wird und gleichzeitig weiterhin eine gute stabile Anlage der jeweiligen Indexierflächen am Anschlag gewährleistet ist. Schon durch ein geringes Anheben des Schneideinsatzes ist dieser gegenüber dem Anschlag verdrehbar bis zum Einrasten in die nächstfolgende Einkerbung. Nach dem Einrasten des Anschlags in die Indexierausnehmung wird nach einem leichten Verdrehen des Schneideinsatzes entgegen der Indexier-Drehrichtung eine sichere Anlage der Indexierfläche am Ende des Anschlages erreicht.
Wichtig dabei ist, daß die seitlichen Ausnehmungen derart angeordnet sind, daß die auf die Wendeschneidplatte bei der Zerspanung einwirkende Schnittkraft die Indexierfläche an das Ende des Anschlages drückt um eine Lageveränderung des Schneideinsatzes durch die Schnittkräfte zu verhindern.

Eine besonders vorteilhafte Handhabung der Indexierung des Schneideinsatzes ist dann gewährleistet, wenn die einzelnen Indexierflächen unter einem Winkel β zwischen 9° und 14° geneigt sind.
Wenn die Indexierfläche mit der benachbarten Fläche der jeweiligen dachförmigen Einkerbung einen Winkel ε von 90° einschließt, wird bei entsprechender Ausgestaltung des Anschlages und der Beachtung zulässiger Toleranzen erreicht, daß eine sichere Indexierung eindeutig gewährleistet ist, da dann der Schneideinsatz entweder mit der Indexierfläche oder mit der benachbarten Fläche gut an einer der entsprechenden Gegenflächen des Anschlages anliegt.

Der Anschlag kann entweder als einstückiges Teil mit dem Werkzeuggrundkörper das durch geeignete mechanische Bearbeitung hergestellt wird, oder als getrenntes Teil das mit dem Werkzeuggrundkörper verbunden ist, ausgeführt sein.

Als vorteilhafte Variante der zweiten Ausführungsmöglichkeit hat es sich bewährt, den Anschlag als einen in die Auflagefläche des Werkzeuggrundkörpers eingearbeiteten Stift, vorzugsweise aus gehärtetem Stahl auszuführen. Eine derartige Ausführung ist besonders leicht herstellbar. Als Stifte sind Normstifte mit einer bombierten Fläche an einem Ende zur Anlage an der Indexierfläche und mit einem konisch zulaufenden, gegenüberliegenden Ende zur leichten Einführung des Stiftes in die Aufnahmebohrung des Werkzeuggrundkörpers in welche der Stift leicht eingepreßt wird, verwendbar.

Der große Vorteil einer derartigen Stiftanordnung liegt darin, daß die Aufnahmebohrung für den Stift im Werkzeuggrundkörper weitgehend außerhalb der Auflagefläche für den Schneideinsatz liegt, die dadurch nahezu ungeschwächt ist und durch den Schneideinsatz auch nach härtestem Einsatz nicht verformt wird.

Besonders bewährt dabei hat sich, wenn der Winkel α den der Stift mit der Auflagefläche des Werkzeuggrundkörpers und der Winkel β den die einzelnen Indexierflächen des Schneideinsatzes zu einer Senkrechten N auf die Grundfläche einschließen, gleich groß sind. Dadurch wird eine Anlage der einzelnen Indexierflächen im Zentrum am Ende des Stiftes erreicht.

Für manche Anwendungen kann es vorteilhaft sein, die seitlichen dachförmigen Einkerbungen nicht am Schneideinsatz selbst anzubringen, sondern an einer zwischen Schneideinsatz und Auflagefläche des Werkzeuggrundkörpers angeordneten Unterlagsplatte. In einem solchen Fall muß der Schneideinsatz mit der Unterlagsplatte durch geeignete Maßnahmen verdrehfest verbunden werden.

Besonders vorteilhaft wirkt sich die erfindungsgemäße Ausgestaltung einer Indexiereinrichtung dann aus, wenn der Schneideinsatz eine Mittellochwendeschneidplatte ist, die mit dem Werkzeuggrundkörper über eine das Mittelloch durchsetzenden Schraube verbunden ist.
In diesem Fall ist es zur Weiterindexierung der Wendeschneidplatte nicht notwendig, die Schraube vollständig zu lösen, sondern es reicht eine zwei- bis dreimalige Umdrehung aus, um die Wendeschneidplatte für die Weiterindexierung genügend freizustellen.

Weiters ist es von Vorteil, wenn die jeweilige Stirnfläche der dachförmigen seitlichen Einkerbungen einen Winkel δ zwischen 5° und 35°, mit einer Parallelen P zur Grundfläche einschließt.
Bei Einhaltung dieses Winkelbereiches ist einerseits ein eindeutiges Freigehen des Schneideinsatzes beim Wechseln der Indexierposition gewährleistet und andererseits auch eine ausreichend gute Anlage des Anschlages an der jeweiligen Indexierfläche gewährleistet.

Besonders vorteilhaft ist es, wenn der Schneideinsatz acht seitliche Einkerbungen aufweist, die jeweils unter einem Winkel von 45° symmetrisch am Umfang verteilt sind.
Damit wird einerseits noch ausreichende Stabilität des durch die seitlichen Einkerbungen geschwächten Schneideinsatzes erreicht und andererseits eine möglichst große Anzahl unterschiedlich einsetzbarer Schneidkantenabschnitte erreicht.

Im folgenden wird die Erfindung an Hand von Figuren näher erläutert.
Es zeigen:
- Figur 1: eine perspektivische Darstellung einer Wendeschneidplatte für ein erfindungsgemäßes Zerspanungswerkzeug in einer Ansicht von schräg oben
- Figur 2: die perspektivische Darstellung der Wendeschneidplatte nach Figur 1 in einer Ansicht von schräg unten
- Figur 3: die perspektivische Darstellung eines erfindungsgemäßen Zerspanungswerkzeuges in Explosionsansicht
- Figur 4: die perspektivische Darstellung einer Variante eines erfindungsgemäßen Zerspanungswerkzeuges in Explosionsansicht
- Figur 5: das erfindungsgemäße Zerspanungswerkzeug nach Figur 3 im Schnitt

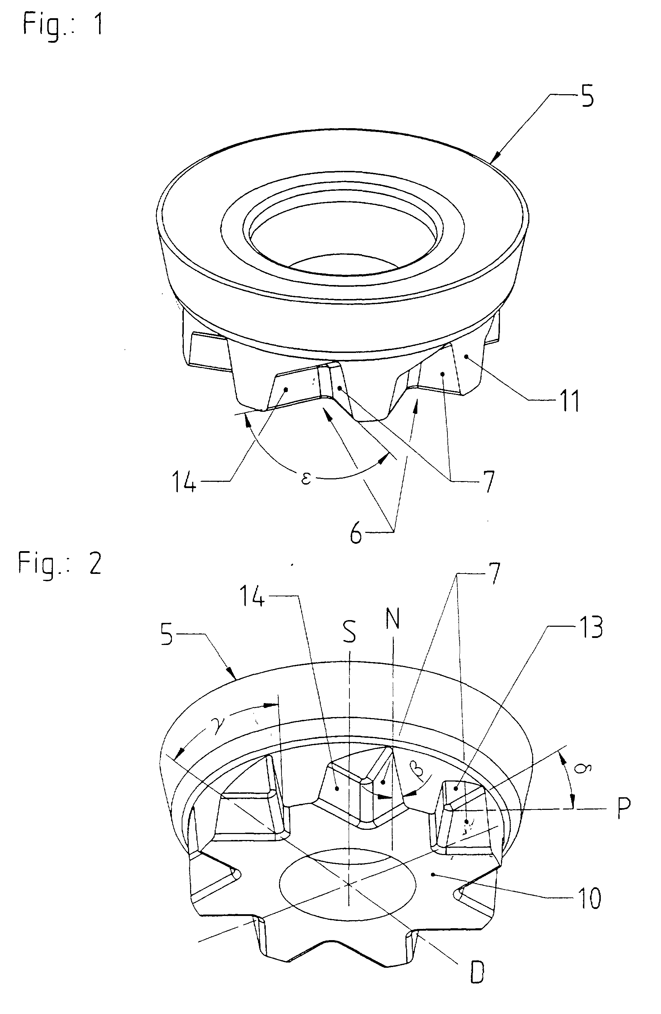

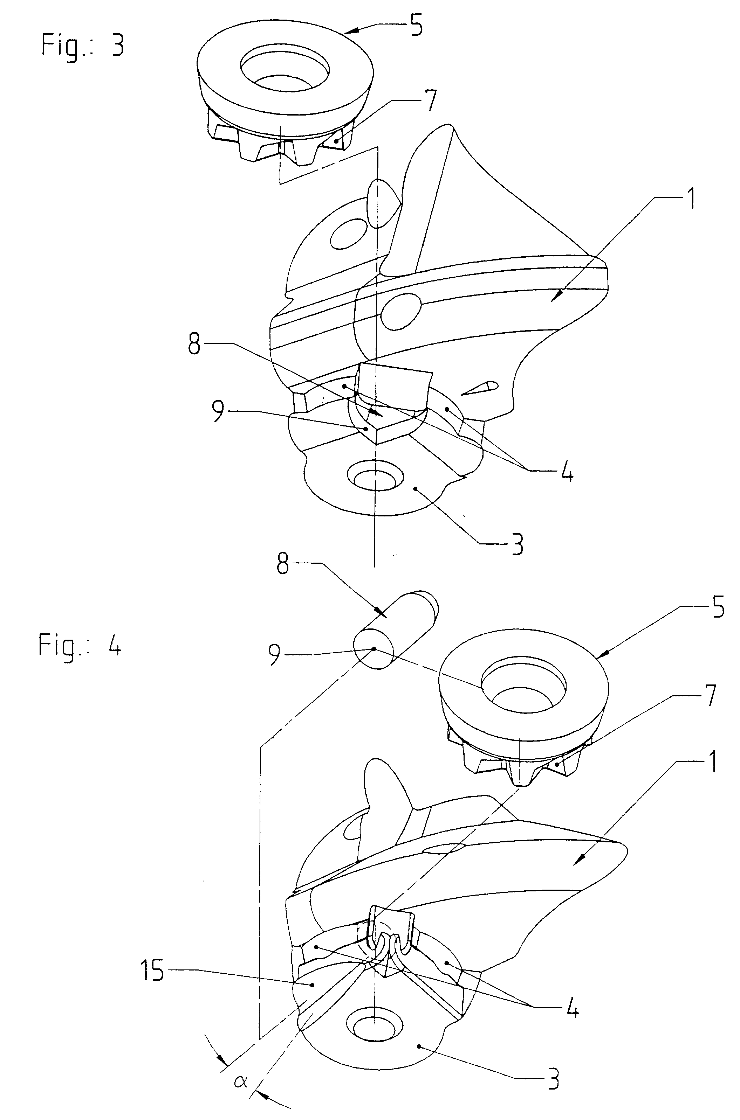

Das erfindungsgemäße Zerspanungswerkzeug ist in den Figuren 3 bis 5 als Teil eines Fräswerkzeuges mit einem Plattensitz für die Aufnahme einer Rund-Wendeschneidplatte -5-, welche in den Figuren 1 und 2 vergrößert wiedergegeben ist, dargestellt.

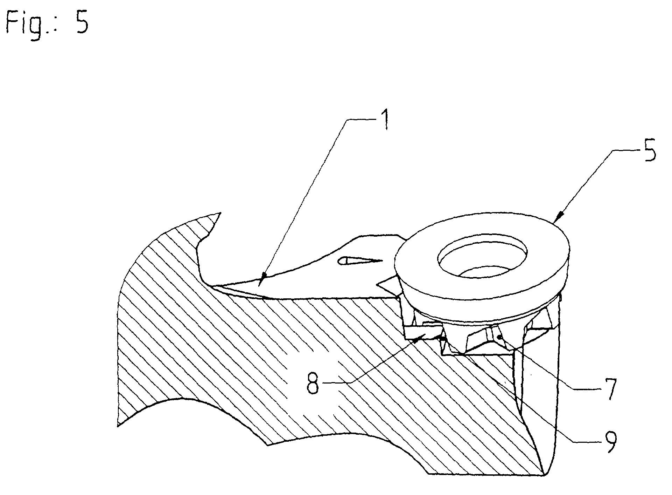

Der Werkzeuggrundkörper -1- des Fräswerkzeuges weist einen Plattensitz mit einer Auflagefläche -3- und zwei seitlichen Anlageflächen -4- für eine Rund-Wendeschneidplatte -5- mit Mittelloch auf. Die Wendeschneidplatte -5- weist angrenzend an die Freifläche einen zylinderförmigen Abschnitt -11- auf, der mit 8 seitlichen, dachförmigen Einkerbungen -6- versehen ist. Jede dieser Einkerbungen -6- weist eine Indexierfläche -7- auf, die zu einer Senkrechten N auf die Grundfläche -10- der Wendeschneidplatte -5- unter einem Winkel β von 11° geneigt ist. Gleichzeitig verläuft die Schnittlinie der Indexierfläche -7- mit der Grundfläche -10- unter einem Winkel γ von 22,5° zu der Durchmesserlinie D die durch das radial innen liegende Ende der Schnittlinie verläuft. Die der Indexierfläche -7- benachbarte Fläche -14- der dachförmigen Einkerbung -6- schließt mit der Indexierfläche -7- einen Winkel ε von 90° ein. Die Stirnfläche -13- der Einkerbung -6- verläuft zur Grundfläche -10- des Schneideinsatzes, zur Symmetrieachse S hin abfallend, unter einem Winkel δ von 30°. Das erfindungsgemäße Fräswerkzeug nach Figur 3 weist einen Anschlag -8- auf, der als einstückiges Teil mit dem Werkzeuggrundkörper -1- aus diesem herausgefräst ist. Die Deckfläche des Anschlages -8- verläuft parallel zur Auflagefläche -3-, seine Endlfäche -9- senkrecht dazu. In Figur 5 ist im Schnitt im eingebauten Zustand der Wendeschneidplatte -5- die Anlage der Indexierfläche -7- an der Endfläche -9- des Anschlages -8- deutlich zu erkennen. In der Variante eines erfindungsgemäßen

Fräswerkzeuges nach Figur 4 ist der Anschlag -8- als Rundstift ausgeführt, der unter einem Winkel α von 11° schräg in eine Bohrung -15- des Werkzeuggrundkörpers -1- eingesetzt wird.

## Patentansprüche

1. Zerspanungswerkzeug bestehend aus einem Werkzeuggrundkörper (1) und einem oder mehreren Schneideinsätzen (5), der Werkzeuggrundkörper (1) mit einem oder mehreren Plattensitzen jeweils mit einer Auflagefläche (3) und einer oder mehreren seitlichen Anlageflächen (4), zur Aufnahme eines auswechselbaren Schneideinsatzes (5) mit mindestens abschnittsweise zylinder- oder kegelstumpfförmiger Freifläche, wobei der Schneideinsatz (5) in der Freifläche oder in einem an die Freifläche angrenzenden Abschnitt (11) mehrere seitliche dachförmige Einkerbungen (6) mit jeweils einer ebenen Indexierfläche (7) aufweist und über einen am Werkzeuggrundkörper (1) vorspringend angeordneten Anschlag (8), der mit seinem Ende (9) an einer Indexierfläche (7) anliegt, in vorbestimmten unterschiedlichen Lagen positionierbar ist,
**dadurch gekennzeichnet, daß** die zylinder- oder kegelstumpfförmige Freifläche als Kontaktfläche mit der bzw. den seitlichen Anlageflächen (4) dient,
**daß** die einzelnen Indexierflächen (7) unter einem Winkel (β) zwischen 5° und 20° zu einer Senkrechten (N) auf die Grundfläche (10) des Schneideinsatzes (5) geneigt sind und daß die Schnittlinie zwischen einer Indexierfläche (7) und der Grundfläche (10) mit derjenigen Durchmesserlinie (D)-bezogen auf die zylinder- oder kegelstumpfförmige Freifläche - einen Winke (γ) im Bereich zwischen 15° und 45° einschließt, die den radial innen liegenden Endpunkt dieser Schnittgerade schneidet.

2. Zerspanungswerkzeug nach Anspruch 1, **dadurch gekennzeichnet, daß** die einzelnen Indexierflächen (7) unter einem Winkel (β) zwischen 9° und 14° geneigt sind.

3. Zerspanungswerkzeug nach Anspruch 1 oder 2, **dadurch gekennzeichnet, daß** die Indexierfläche (7) mit der benachbarten Fläche (14) der jeweiligen dachförmigen Einkerbung (6) einen Winkel (ε) von 90° einschließt.

4. Zerspanungswerkzeug nach einem der Ansprüche 1 bis 3, **dadurch gekennzeichnet, daß** der Anschlag (8) ein in die Auflagefläche (3) des Werkzeuggrundkörpers (1) eingearbeiteter Stift ist, der mit der Auflagefläche (3) einen Winkel (α) zwischen 5° und 20° einschließt.

5. Zerspanungswerkzeug nach Anspruch 4, **dadurch gekennzeichnet, daß** der Stift (8) und die einzelnen Indexierflächen (7) unter demselben Winkel (α, β) geneigt sind.

6. Zerspanungswerkzeug nach einem der Ansprüche 1 bis 5, **dadurch gekennzeichnet, daß** der an die Freifläche angrenzende Abschnitt (11) eine verdrehfest mit dem Schneideinsatz (5) verbundene Unterlagsplatte ist.

7. Zerspanungswerkzeug nach einem der Ansprüche 1 bis 6, **dadurch gekennzeichnet, daß** der Schneideinsatz (5) eine Mittellochwendeschneidplatte ist, die mit dem Werkzeuggrundkörper (1) über eine das Mittelloch durchsetzende Schraube (12) verbunden ist.

8. Zerspanungswerkzeug nach einem der Ansprüche 1 bis 7, **dadurch gekennzeichnet, daß** die jeweilige Stirnfläche (13) der dachförmigen seitlichen Einkerbungen (6) einen Winkel (δ) zwischen 5° und 35° mit einer Parallelen P zur Grundfläche (10) einschließt.

9. Zerspanungswerkzeug nach einem der Ansprüche 1 bis 8, **dadurch gekennzeichnet, daß** der Schneideinsatz (5) eine Rundplatte ist, mit acht seitlichen Einkerbungen (6), die jeweils unter einem Winkel von 45° symmetrisch am Umfang verteilt sind.

10. Schneideinsatz (5) mit mindestens abschnittsweise zylinder- oder kegelförmiger Freifläche der in der Freifläche oder in einem an die Freifläche angrenzenden Abschnitt (11) mehrere seitliche dachförmige Einkerbungen (6) mit jeweils einer ebenen Indexierfläche (7) aufweist, **dadurch gekennzeichnet, dass** die zylinder - oder kegelstumpfförmige Freifläche als Kontaktfläche mit entsprechenden seitlichen Anlageflächen (4) eines Werkzeuggrundkörpers (1) dient, dass die einzelnen Indexierflächen (7) unter einem Winkel β zwischen 5° und 20° zu einer Senkrechten N auf die Grundfläche (10) des Schneideinsatzes (5) geneigt sind und dass die Schnittlinie zwischen einer Indexierfläche (7) und der Grundfläche (10) mit derjenigen Durchmesserlinie D - bezogen auf die zylinder- oder kegelstumpfförmige Freifläche - einen Winkel (γ) im Bereich zwischen 15° und 45° einschließt, die den radial innen liegenden Endpunkt dieser Schnittgeraden schneidet.

## Claims

1. A cutting tool comprising a tool base body (1) and one or more cutting inserts (5), the tool base body (1) having one or more plate-like seats, each having a supporting surface (3) and one or more lateral abutment surfaces (4), for the purpose of receiving an exchangeable cutting insert (5) having a flank surface which is cylindrical or frustoconical, at least in portions, the cutting insert (5) having, in the flank surface or in a portion (11) adjacent to the flank surface, a plurality of lateral roof-shaped notches (6), each of which has a planar indexing surface (7), and being movable into pre-determined different positions by way of a stop (8), which is arranged in projecting manner on the tool base body (1) and abuts against an indexing surface (7) by means of its end (9),
**characterised in that** the cylindrical or frustoconical flank surface serves as a contact surface for the lateral abutment surface(s) (4), **in that** the individual indexing surfaces (7) are inclined at an angle (β) of between 5°
and 20° with respect to a vertical line (N) towards the base surface (10) of the cutting insert (5), and **in that** the line of intersection between an indexing surface (7) and the base surface (10) forms an angle (γ) in the range between 15° and 45° - relative to the cylindrical or frustoconical flank surface - with that diameter line (D) which intersects the radially inner end point of this straight line of intersection.

2. A cutting tool according to Claim 1, **characterised in that** the individual indexing surfaces (7) are inclined at an angle (β) of between 9° and 14°.

3. A cutting tool according to Claim 1 or 2, **characterised in that** the indexing surface (7) forms an angle (ε) of 90° with the neighbouring surface (14) of the respective roof-shaped notch (6).

4. A cutting tool according to one of Claims 1 to 3, **characterised in that** the stop (8) is a pin which is incorporated in the supporting surface (3) of the tool base body (1), and which forms an angle (α) of between 5° and 20° with the supporting surface (3).

5. A cutting tool according to Claim 4, **characterised in that** the pin (8) and the individual indexing surfaces (7) are inclined at the same angle (α, β).

6. A cutting tool according to one of Claims 1 to 5, **characterised in that** the portion (11) adjacent to the flank surface is a bearing plate connected in torsion-resistant manner to the cutting insert (5).

7. A cutting tool according to one of Claims 1 to 6, **characterised in that** the cutting insert (5) is a centre-hole indexable insert, which is connected to the tool base body (1) by way of a screw (12) penetrating the centre hole.

8. A cutting tool according to one of Claims 1 to 7, **characterised in that** the respective end face (13) of the roof-shaped lateral notches (6) forms an angle (δ) of between 5° and 35° with a line P parallel to the base surface (10).

9. A cutting tool according to one of Claims 1 to 8, **characterised in that** the cutting insert (5) is a circular plate having eight lateral notches (9) which are distributed symmetrically about the periphery, each at an angle of 45°.

10. A cutting insert (5) having a flank surface which is cylindrical or frustoconical, at least in portions, and having, in the flank surface or in a portion (11) adjacent to the flank surface, a plurality of lateral roof-shaped notches (6), each of which has a planar indexing surface (7), **characterised in that** the cylindrical or frustoconical flank surface serves as a contact surface for corresponding lateral abutment surfaces (4) of a tool base body (1), **in that** the individual indexing surfaces (7) are inclined at an angle (β) of between 5° and 20° with respect to a vertical line N towards the base surface (10) of the cutting insert (5), and **in that** the line of intersection between an indexing surface (7) and the base surface (10) forms an angle (γ) in the range between 15° and 45° - relative to the cylindrical or frustoconical flank surface - with that diameter line (D) which intersects the radially inner end point of the straight line of intersection.

## Revendications

1. Outil d'enlèvement de copeaux, qui se compose d'un corps de base (1) d'outil et d'un ou plusieurs inserts de coupe (5), dans lequel le corps de base (1) d'outil comporte un ou plusieurs logements de plaquettes comportant chacun une surface d'assise (3) et une ou plusieurs surfaces d'appui latérales (4) pour recevoir un insert de coupe interchangeable (5) qui comporte au moins une face de dépouille partiellement cylindrique ou tronconique, et dans lequel l'insert de coupe (5) comporte dans la face de dépouille ou dans une partie (11) adjacente à la face de dépouille plusieurs rainures latérales (6) en forme de toit comprenant chacune une surface d'indexation plane (7) et peut être disposé dans des positions différentes prédéterminées au moyen d'une butée (8) qui est agencée en saillie sur le corps de base (1) d'outil et repose par son extrémité (9) sur une surface d'indexation (7),
**caractérisé en ce que**
la face de dépouille cylindrique ou tronconique sert de surface de contact avec la ou les surfaces d'appui latérales (4), **en ce que** les surfaces d'indexation individuelles (7) sont inclinées d'un angle (β) compris entre 5° et 20° par rapport à la normale (N) à la surface de base (10) de l'insert de coupe (5) et **en ce qu'**un angle (γ) compris dans une plage de 15° à 45° est inclus entre la ligne d'intersection d'une surface d'indexation (7) et de la surface de base (10) et la ligne diamétrale (D) - par rapport à la face de dépouille cylindrique ou tronconique - qui passe par le point d'extrémité de cette ligne d'intersection situé radialement à l'intérieur.

2. Outil d'enlèvement de copeaux selon la revendication 1, **caractérisé en ce que** les surfaces d'indexation individuelles (7) sont inclinées d'un angle (β) compris entre 9° et 14°.

3. Outil d'enlèvement de copeaux selon la revendication 1 ou 2, **caractérisé en ce qu'**un angle (ε) de 90° est inclus entre la surface d'indexation (7) et la surface voisine (14) de la rainure respective (6) en forme de toit.

4. Outil d'enlèvement de copeaux selon l'une quelconque des revendications 1 à 3, **caractérisé en ce que** la butée (8) est une cheville qui est usinée dans la surface d'assise (3) du corps de base (1) d'outil et qui forme un angle (α ) compris entre 5° et 20° avec la surface d'assise (3).

5. Outil d'enlèvement de copeaux selon la revendication 4, **caractérisé en ce que** la cheville (8) et les surfaces d'indexation individuelles (7) sont inclinées selon le même angle (α, β).

6. Outil d'enlèvement de copeaux selon l'une quelconque des revendications 1 à 5, **caractérisé en ce que** la partie (11) adjacente à la surface de dépouille est une console connectée de façon fixe à rotation à l'insert de coupe (5).

7. Outil d'enlèvement de copeaux selon l'une quelconque des revendications 1 à 6, **caractérisé en ce que** l'insert de coupe (5) est une plaquette réversible à orifice central qui est connectée au corps de base (1) d'outil au moyen d'une vis (12) qui traverse l'orifice central.

8. Outil d'enlèvement de copeaux selon l'une quelconque des revendications 1 à 7, **caractérisé en ce qu'**un angle (d) de 5 à 35° est inclus entre la surface frontale respective (13) des rainures latérales (6) en forme de toit et une parallèle (P) à la surface de base (10).

9. Outil d'enlèvement de copeaux selon l'une quelconque des revendications 1 à 8, **caractérisé en ce que** l'insert de coupe (5) est une plaque ronde à huit rainures latérales (6) qui sont réparties symétriquement sur la périphérie en incluant des angles respectifs de 45°.

10. Insert de coupe (5) qui comporte au moins une surface de dépouille au moins partiellement cylindrique ou tronconique telle que plusieurs rainures latérales (6) en forme de toit comportant chacune une surface d'indexation plane (7) sont ménagées dans la surface de dépouille ou dans une partie (11) adjacente à la surface de dépouille, **caractérisé en ce que** la face de dépouille cylindrique ou tronconique sert de surface de contact avec des surfaces d'appui latérales (4) correspondantes d'un corps de base (1) d'outil, **en ce que** les surfaces d'indexation individuelles (7) sont inclinées d'un angle (β) compris entre 5° et 20° par rapport à la normale (N) à la surface de base (10) de l'insert de coupe (5) et **en ce qu'**un angle (γ) compris dans une plage de 15° à 45° est inclus entre la ligne d'intersection d'une surface d'indexation (7) et de la surface de base (10) et la ligne diamétrale (D) - par rapport à la face de dépouille cylindrique ou tronconique - qui passe par le point d'extrémité de cette ligne d'intersection situé radialement à l'intérieur.
